# EUROPEAN PATENT SPECIFICATION

(11) **EP 4 444 100 B1**
(45) Date of publication and mention of the grant of the patent: **17.09.2025**
(21) Application number: 22835337.1
(22) Date of filing: 09.12.2022
(51) Int. Cl.: A22C 7/00, A22C 29/02, A23L 17/00

(54) **SHRIMP MOULDING APPARATUS**
GARNELENFORMVORRICHTUNG
APPAREIL DE MOULAGE DE CREVETTES

(30) Priority: 10.12.2021 EP 21213718
(43) Date of publication of application: 16.10.2024
(73) Proprietor: Société des Produits Nestlé S.A., 1800 Vevey (CH)
(72) Inventor: BRETON, Olivier, 1046 Rueyres (CH); WANG, Yu-Jie, 1000 Lausanne (CH); HINRICHS, Katharina, 70599 Stuttgart (DE); CAVIN, Serge, 1373 Chavornay (CH); MARCHIONINI, Yves, 1070 PUIDOUX (CH)
(74) Representative: Dinger, Hansjörg
(86) International application number: PCT/EP2022/085240
(87) International publication number: WO 2023/105069

(56) References cited:
- EP-A2- 0 239 203
- US-A- 4 303 008
- US-A- 4 720 391

## Description

### FIELD AND BACKGROUND

The present invention relates particularly, but not exclusively, to an apparatus for moulding food products such as shrimps and a method of forming the shrimps. The apparatus may be used for moulding other crustaceans or fish products such as calamari or scallops. The apparatus and method are primarily for the formation of plant-based food products. However, they could be used to manufacture non plant-based food products.

In recent years, there has been an increased trend toward plant-based food. This is driven by increased awareness of the effects on the environment of eating meat, fish and dairy. Additionally, overfishing in the world's oceans is leading to degraded ecosystems.

There is also a desire from consumers to eat plant-based food products which replicate, in appearance, taste and texture, non plant-based products.

The present inventors have therefore recognised the need to make plant-based alternatives to fish products such as shrimps which are a similar texture to the real product. In existing apparatus and methods of forming food products such as shrimps, minced fish is added to a mould. The mould is then heated which causes the minced fish to expand. This can lead to air bubbles in the product (which alter its texture) and part of the fish expanding out of the mould (which alters its appearance).

EP0239203 describes an apparatus and method for the production of fish-paste food products having the appearance of shelled shrimp, crab claws, lobster, abalone, etc. The apparatus comprises a two-piece mold with a mold cavity conforming to the shape of the product, means for spraying a coloring agent into the cavity, filling means for pressing a paste of ground fish meat into the mold cavity, a heating unit for heating and solidifying the fish paste, and means for removing the heated and solidified fish-paste food products from the mold. The invention further comprises the method of providing a split mold having a cavity generally conforming to the shape of a shellfish, spraying the inside wall of the cavity with an aqueous food coloring, filling the cavity with a meat paste under pressure, heating the mold and the paste to a sufficient temperature to cook and color the meat paste, and removing the product from the mold.

US4303008 describes a method and apparatus for producing a restructured food product from small forms thereof, by comminuting such small forms to provide a fluent paste, injecting the paste under high pressure into mold cavities where the paste is rapidly heated while it is confined within the mold cavity and maintained at an elevated pressure, whereby a restructured food product is formed which has generally the same characteristics and qualities of the original food product and which retains the organoleptic properties of the original products that are frequently lost in conventional food processing methods.

There is therefore a desire for an apparatus and method to be developed which prevents air bubbles being formed within the product and fully contain the product in a mould whilst it is being heated to ensure it is moulded to the desired shape.

It will be recognised from the disclosure herein that the invention is also suitable for use in other applications. For example, the apparatus could be used for the moulding of non plant-based products such as minced fish into a shrimp or other shapes or for the moulding of other non-food based products.

### SUMMARY

Particular aspects and embodiments are set out in the appended claims.

Viewed from a first aspect, there is provided a food moulding apparatus. The moulding apparatus comprises at least one mould comprising at least one cavity for receiving a food stuff to be moulded and an injector arrangement comprising at least one injection nozzle or at least one array of injection nozzles. Each cavity comprises an inlet configured in use to receive the food stuff from the injector arrangement and an outlet configured in use to allow gas out of the cavity. The apparatus additionally comprises a closure arrangement, wherein the closure arrangement is configured to selectively close the inlet, wherein the closure arrangement comprises a plurality of stoppers, each configured to be inserted into an inlet of a cavity or wherein the closure arrangement comprises a valve in each inlet selectively allowing food stuff into a cavity.

Thus, according to the invention, a food moulding apparatus is provided which is able to form food such as shrimps which replicate in appearance, taste and texture, a real shrimp. This is achieved by the closure arrangement which ensures that the food stuff is not able to expand out of the mould when it is heated. This prevents bubbles being formed in the moulded food stuff and prevent it from having a shape different to that of the mould.

The term 'array of injection nozzles' is intended to mean a line of injection nozzles. This may be used if each mould comprises multiple cavities, such that each nozzle of the array of injection nozzles is aligned with a cavity in order to fill the cavities simultaneously. This is beneficial in a continuous process where it is desirable to manufacture the shrimps quickly. Alternatively, if each mould only comprises a single cavity, rather than at least one array of nozzles, at least one nozzle may be used.

The purpose of the outlet is for venting the inside of the cavity to prevent the pressure in the cavity increasing too much as the cavity is filled. Although it is desirable for the pressure in the cavity to remain high when the cavity is being filled in order to ensure the food stuff is biased against the sides of the cavity, the outlet vent helps alleviate pressure which may prevent the cavity being filled to the desired amount. Furthermore, the outlet ensures that the food stuff travels right to the end of the tail to ensure the manufactured shrimp replicates a real shrimp. The outlet may have a diameter of about 0.5 to 1 mm and the inlet may have a diameter of about 2 to 10 mm.

The closure arrangement may be part of the at least one mould or may be applied to the mould mechanically or by hand. The closure arrangement may be a means for blocking off the inlet so that no food stuff can flow in or out of the cavity. Additionally, the increased pressure in the cavity results in better heating efficiency when the mould is heated.

An inlet cross sectional area may be greater than an outlet cross sectional area. Thus, the cross sectional area of the inlet through which the food stuff flows into the cavity is larger than the cross sectional area of the venting outlet. In this way, pressure grows in the mould during heating. This in turn biases the dough against the inner surface of the mould as it expands towards the vent thereby giving good quality mould contact.

The injector arrangement may comprise two storage containers: a first storage container configured to hold a first component of the food stuff and a second storage container configured to hold a second component of the food stuff.

The first storage container may hold a coloured food stuff and the second storage container a white food stuff. In this way, coloured dough can be injected into the mould cavities to coat the internal surface of the cavities before white food stuff is injected into the cavities. By using the coloured and white food stuffs, the appearance of a shrimp can be realistically replicated. By having two storage containers with the two food stuffs, it is not necessary to have a later spraying process for applying to the shrimp. Thus, the efficiency of the process for manufacturing the replica shrimps is increased.

The injector arrangement may comprise two injection nozzles: a first injection nozzle in fluid communication with the first storage container; and a second injection nozzle in fluid communication with the second storage container, wherein the cavity may be configured to receive food stuff from the first injection nozzle followed by the second injection nozzle.

Thus, the cavities are able to first receive the coloured food stuff then the white food stuff from the two separate nozzles. This avoids contamination between the food stuffs. Furthermore, by having two separate nozzles, food stuffs with different viscosities can be used. It may be desirable to have a much less viscous food stuff as the coloured food stuff so that it evenly coats the inside of the mould.

The injector arrangement may comprise a single injection nozzle in fluid communication with the first storage container and the second storage container. Thus, the moulds are not required to be moved between nozzles since food stuff from both storage containers is received from the same nozzle.

An outer surface of the at least one injection nozzle and an inner surface of the inlet may be complementary with one another. In this way, when the injection nozzle is used to inject a food stuff, it fits within the inlet. This results in an increased pressure in the cavity which biases the food stuff against the side of the cavity. Thus, the shape of the finished product is improved.

The at least one injection nozzle may have a conical outer shape. This enables a tight fit in the conical inlet.

The apparatus may comprise a plurality of moulds, wherein each mould may comprise a plurality of cavities. The moulds may be arranged on a conveyer belt where each cavity of each mould is configured to be filled simultaneously from the array of nozzles. Thus, the apparatus provides a continuous production system with high throughput.

The closure arrangement may comprise a plurality of stoppers, each configured to be inserted into an inlet of a cavity. These stoppers may be manually inserted or inserted by a machine. If inserted by a machine, this provides a more continuous process thus increasing the output of the apparatus. The stoppers may be made of silicon. Silicon is a food safe material which is able to provide a tight seal in the inlet. Furthermore, the silicon stopper will not damage the coating of the mould.

The closure arrangement may comprise a valve in each inlet selectively allowing food stuff into a cavity. The valve may be rotatably moved between an open position where food stuff is able to move into the cavity and a closed position where food stuff is prevented from passing into or out of the cavity. The closure arrangement may also be used to control the amount of food stuff injected into the cavity. For example. If the cavities are overfilled, the excess food stuff may be cut off from the cavity during closure. Additionally, some excess food stuff may flow out of the outlet due to the pressure inside the cavity.

The mould may be made of a metal such as Aluminium. A metal is used for the mould as it provides a better medium for transferring heat than, for example, plastic. In other examples, plastic may be used for the mould instead of metal. The interior surface of the cavity may be coated in a food safe material such as Polytetrafluoroethylene, PTFE.

The at least one cavity may be crustacean shaped. The crustacean may be a shrimp comprising a head end and a tail end. Thus, the mould may be used to form an imitation crustacean such as a shrimp.

The inlet may be adjacent the head end of the shrimp and the outlet may be adjacent the tail end of the shrimp. Thus, when food stuff is injected through the inlet into the cavity it is able to fill the tail end of the cavity first and air inside the cavity is able to escape from the outlet. This ensures that the cavity is properly filled and no air bubbles are formed which would alter the texture of the shrimp.

Viewed from a second aspect, there is provided a method of forming a food product in the food moulding apparatus of the first aspect. The method comprises injecting a first component of the food stuff into the cavity, injecting a second component of the food stuff into the cavity, closing the inlet with the closure arrangement, heating the at least one mould, and removing the food product from the mould.

The second component of the food stuff may be injected before the first component solidifies. This is to ensure that the second component of the food stuff is able to cause the first component of the food stuff to spread and coat the inside of the mould.

In addition to heating the mould, cations such as calcium and additional pressure may be used in order to set the food stuff. For example, a substance such as alginate, which forms a gel in the presence of calcium, may be used in the food stuff. Calcium may be encapsulated by, for example, a solid fat and suspended in the food stuff containing alginate. The release of calcium cations will occur while heating (due to the melting of fat), which reach with the alginate to form a gel. This helps the food stuff to set. Gelation may also be induced by high pressure.

The removal process may comprise opening the mould and turning the mould upside down so that the moulded product falls out. Pressured air can be used if gravitational discharge is not enough.

The ratio of the first component of food stuff to the second component of food stuff may be approximately 1:7. Thus, a thin layer of coloured food stuff (the first component) is able to coat the inside of the mould before the white food stuff (the second component) is injected. When the white food stuff is injected after the coloured food stuff, it pushes the first injected coloured food stuff towards the tail end. This enables the manufactured shrimp to visibly replicate a real shrimp. This ratio of coloured food stuff to white food stuff is beneficial when a shrimp is being formed in the food moulding apparatus as it ensures the right amount of coloured food stuff coats the white food stuff so that it accurately replicates a shrimp. If other food stuffs were being formed, different ratios of first and second food stuff components may be used.

The first component of the food stuff may have a first viscosity and the second component of the food stuff may have a second viscosity, wherein the first viscosity may be lower than the second viscosity. Thus, the less viscous coloured food stuff is more easily able to flow into the mould and coat the internal surface of the cavity to form a thin layer of colour over the surface of the manufactured shrimp. The coloured food stuff may be a diluted form of the white food stuff with colorant added. In other applications where food apart from shrimps are being formed, the first component of the food stuff into the cavity may have a larger viscosity than the second component of the food stuff.

The mould may be heated to a temperature of between about 80 degrees Celsius and about 200 degrees Celsius. The mould may be heated for about 20 minutes at a temperature of about 80 degrees Celsius. The food stuff may need to reach a core temperature of above 80 degrees Celsius for at least 5 minutes when it is being heated in order for it to set.

The heating may be via steam injection to speed heat transfer in the heating area. Alternatively, microwave heating may be used if the mould is made of, for example, a plastic that can withstand high temperatures.

The method may additionally comprise injecting oil into the cavity before injecting the first component of the food stuff. This prevents the food stuff sticking to the cavity when it is removed. If the food stuff sticks to the cavity, the shrimp may break apart when it is removed or the coloured food stuff may remain in the cavity thus ruining the aesthetic.

Other aspects will also become apparent upon review of the present disclosure, in particular upon review of the Brief Description of the Drawings, Detailed Description and Claims sections.

### BRIEF DESCRIPTION OF THE DRAWINGS

Examples of the disclosure will now be described, by way of example only, with reference to the accompanying drawings in which:
Figure 1 shows the food moulding apparatus according to a first aspect of the invention;
Figure 2 shows an injector arrangement for the food moulding apparatus according to a first example;
Figure 3 shows an injector arrangement for the food moulding apparatus according to a second example;
Figure 4 shows an injector arrangement for the food moulding apparatus according to a third example;
Figure 5A to 5D show a mould for the food moulding apparatus according to the first aspect of the invention;
Figure 6A and 6B show an example of how first and second parts of the mould may be attached;
Figure 7A to 7D show a closure arrangement for the food moulding apparatus according to a first example;
Figure 8A and 8B show a closure arrangement for the food moulding apparatus according to a second example;
Figure 9 shows a process for attaching the closure arrangement of the second example, removing it, and opening the mould of the food moulding apparatus; and
Figure 10 shows a shrimp moulded by the food moulding apparatus of the invention.

As used in this specification, the words "comprises", "comprising", and similar words, are not to be interpreted in an exclusive or exhaustive sense. In other words, they are intended to mean "including, but not limited to".

It will be recognised that the features of the above-described examples of the disclosure can conveniently and interchangeably be used in any suitable combination.

### DETAILED DESCRIPTION

The present teaching relates generally to an apparatus for moulding food products such as shrimps and a method of forming the shrimps. The apparatus may also be used to mould food products out of plant-based food stuff or non plant-based food stuff. Alternatively, the apparatus may be used for the moulding of other non-food based products.

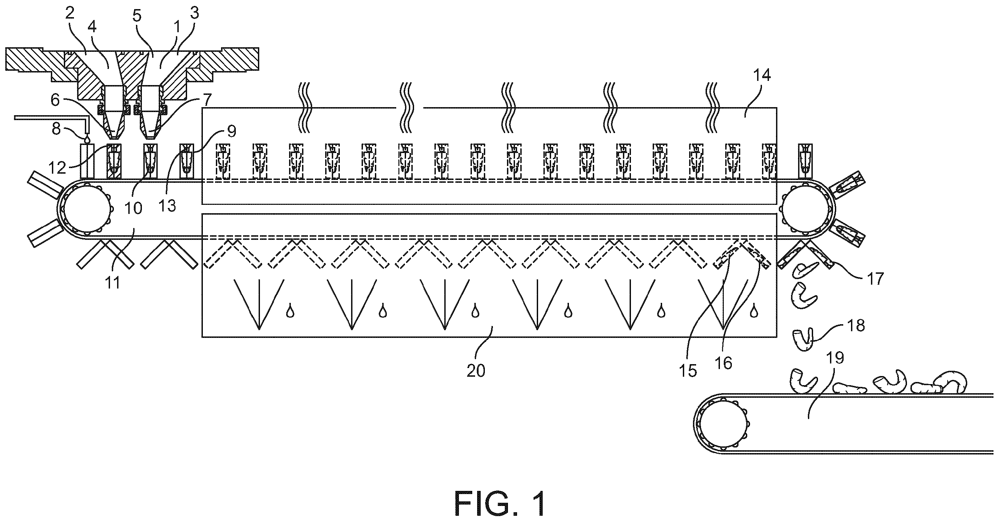

Figure 1 shows a cross-sectional view of a food moulding apparatus according to a first aspect of the invention. This food moulding apparatus is for the production of shrimp shaped food stuff and is a continuous line system. The food moulding apparatus comprises an injector arrangement 1. In this figure, a double injector is used. In place of this, other types of injector arrangements may be used as will be discussed later.

The injector arrangement 1 comprises a first injector 2 and a second injector 3. In the present example, the first injector 2 is for injecting a coloured food stuff and the second injector 3 is for injecting a white food stuff. The first injector 2 comprises a first storage container 4 and a first array of nozzles 6. The first storage container 4 stores the coloured food stuff and passes it to the first array of nozzles 6. The second injector 3 comprises a second storage container 5 and a second array of nozzles 7. The second storage container 5 stores the white food stuff and passes it to the second array of nozzles 7.

A plurality of moulds 9 are arranged on a conveyor system 11. Figure 1 shows a cross section of a single cavity 10 in each mould 9. Each mould 9 may comprise a single cavity 10 or a plurality of cavities 10. In a mould 9 with a plurality of cavities 10, each cavity of a mould is filled by the first array of nozzles 6 and the second array of nozzles 7. Each nozzle of each array of nozzles may be filled from storage containers 4 and 5 or may have individual storage containers.

In the present example, the cavities 10 are in the shape of a crustacean such as a shrimp. Each cavity comprises an inlet 12 configured to receive the food stuff from the first array of nozzles 6 and second array of nozzles 7. If a different product is being formed, the cavities have a different shape.

Although not shown in this figure, each cavity additionally comprises an outlet which acts as an exhaust vent. The outlet may be located on the same surface of the mould as the inlet, i.e. the upwardly facing surface when the mould is in use. This prevents leakage of the food stuff from the cavity.

The food moulding apparatus may additionally comprise a third injector 8 or array of injectors. In the present example, the third injector is used for injecting oil into the cavities 10 of the moulds 9 before the food stuff is injected. This is to prevent the food stuff sticking in the mould. In the present example, therefore, each cavity 10 of each mould 9 receives oil from the third injector 8, the mould 9 is then moved by the conveyor system 11 so that the inlet 12 aligns with the first nozzle 6 where it receives the coloured food stuff before it is moved by the conveyor system 11 so that it aligns with the second nozzle 7 where it receives the white food stuff.

The food moulding apparatus additionally comprises a closure arrangement 13 which can be used to selectively block the inlets 12 of the cavities 10. This prevents the food stuff passing out of the cavity. The closure arrangement 13 will be discussed in more detail later. Once the cavities 10 of the moulds 9 have been filled, therefore, a closure arrangement 13 is used to close the inlets 12 of the cavities 10. The mould is then moved by the conveyor system 11 into a heating chamber 14.

In the heating chamber 14, the moulds 9 are heated to a temperature of between about 80 degrees Celsius and about 200 degrees Celsius. The speed of the conveyor 11 is controlled such that the moulds 9 are in the heating chamber for between about 10 minutes and about 30 minutes. For example, the moulds 9 may be in the heating chamber 14 for about 20 minutes at 80 degrees Celsius.

Once the moulds 9 have been heated for the required amount of time, the mould is then moved by the conveyor system 11 out of heating chamber 14. The closure arrangement is then removed or opened. At this point, the mould 9 travels around a first edge of the conveyor system 11.

The moulds 9 are formed of two parts; a first part 15 and a second part 16. This will be discussed in further detail later. When the mould 9 travels around the edge of the conveyor system 11, a mould release arrangement 17 is activated so that the first part 15 and second part 16 of the moulds open. Since the moulds 9 are in a downwardly facing position at this point, the formed shrimps 18 fall out of the mould due to the force of gravity. The formed shrimps fall onto a product conveyor 19 where they are carried away.

Once the shrimps have been released from the moulds, the open moulds are transported by the conveyor system 11 through a cleaning chamber 20 where the moulds 9 are cleaned. This may be done using water, rotary brushes, and/or pressured air. The moulds then continue to travel around a second edge of the conveyor system 11 at which point the first part 15 and second part 16 of the moulds close together before reaching the location at which they started.

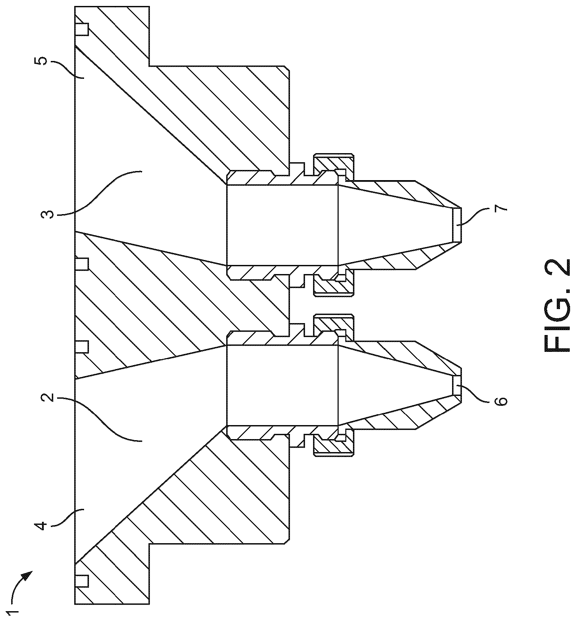

Figure 2 shows the injector arrangement of figure 1 where a double injector is used. As discussed above, the double injector comprises first and second injectors 2, 3 with first and second storage containers 4, 5 and first and second nozzle arrays 6, 7. Food stuff is moved from the storage containers to the nozzles by pumps or mechanical screws. The openings at the end of the first array of nozzles 6 are smaller than the opening at the end of the second array of nozzles 7. This is to control the amount of food stuff injected from the first array of nozzles 6. Additionally, the food stuff injected from the first array of nozzles 6 may have a lower viscosity than that injected from the second array of nozzles. Therefore, the smaller opening controls the flow of the less viscous substance. The first storage container 4 may contain a coloured food stuff and the second storage container 5 may contain a white food stuff.

The nozzles 6, 7 have conical outer shapes. These are arranged to be received in the inlet 12 to the cavities 10 which have complementary shapes to the conical outer surfaces of the nozzles. Thus, when a nozzle is injecting food stuff into the cavity, the nozzle head is fully inserted into the inlet of the cavity. The complementary shape of the two maintains the pressure inside the cavity as it is being filled.

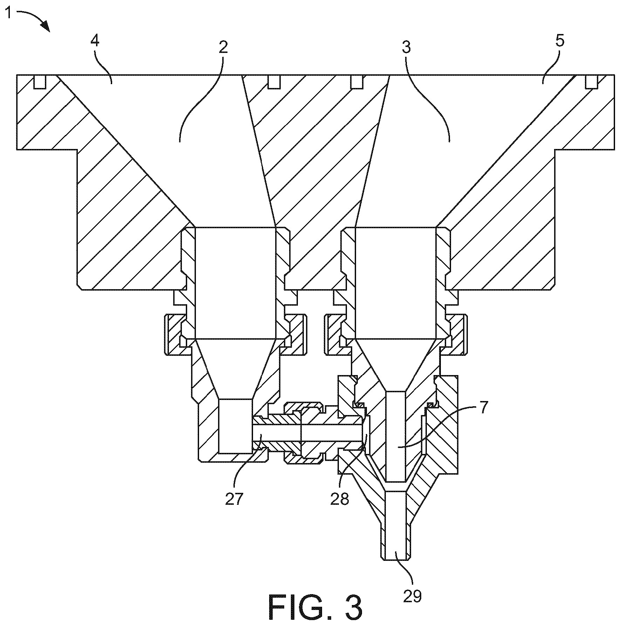

Figure 3 shows an alternative injector arrangement 1 for the food moulding apparatus. This injector arrangement 1 also has first and second injectors 2, 3 and first and second storage containers 4, 5. However, the first injector 2, rather than having a nozzle or array of nozzles through which the coloured food stuff can be expelled into a cavity of the mould, has a food stuff bridge 27. The second injector 3 has a second nozzle 7 similar to that in figure 2.

The food stuff travels from the first injector 2 into the second injector 3 through the bridge 27 and enters into a passage 28 surrounding the second nozzle 7. Both of the coloured food stuff from the first injector 2 and the white food stuff from the second injector 3 are then expelled from the injector arrangement through an additional nozzle 29. Although the additional nozzle 29 is shown as being cylindrical, it may be conical as the nozzles are in figure 2. As with the arrangement in figure 2, the coloured food stuff may be injected first before white food stuff is injected. Alternatively, the food stuffs may be injected simultaneously or alternately.

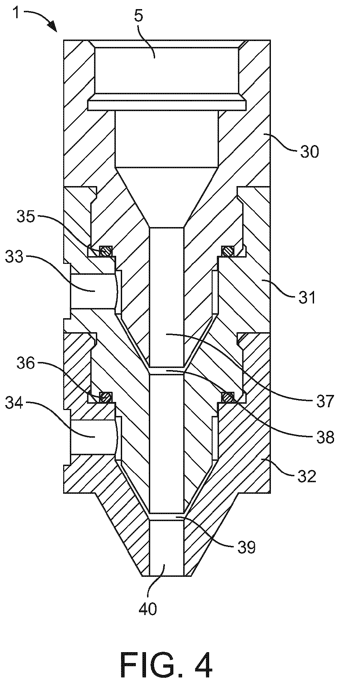

Figure 4 shows a further alternative injector arrangement 1 for the food moulding apparatus. This injector arrangement 1 comprises first, second and third portions 30, 31 and 32. The first portion 30 comprises the second storage container 5 for holding, for example, white food stuff. The second portion 31 is connected to a passage 33 for receiving, for example, a coloured food stuff. The third portion 32 is connected to a passage 34 for receiving, for example, oil. The food stuff/oil is moved from the container 5 and through passages 33, 34 by pumps. O-rings 35, 36 are located between the first and second portions and the second and third portions to seal the food stuff/oil in the injector arrangement 1.

Food stuff from container 5 travels down a central passage 37 in the injector arrangement 1. Food stuff from passage 33 travels through a gap 38 between the first and second portions and into the central passage 37. Oil from passage 34 travels through a gap 39 between the second and third portions and into the central passage 37. The oil and foods stuffs are then able to pass out of a nozzle 40 at the end of the injector arrangement 1. The substances may be injected in the following order: oil, coloured food stuff, white food stuff. Alternatively, the oil may be injected first followed by the food stuffs simultaneously or alternately.

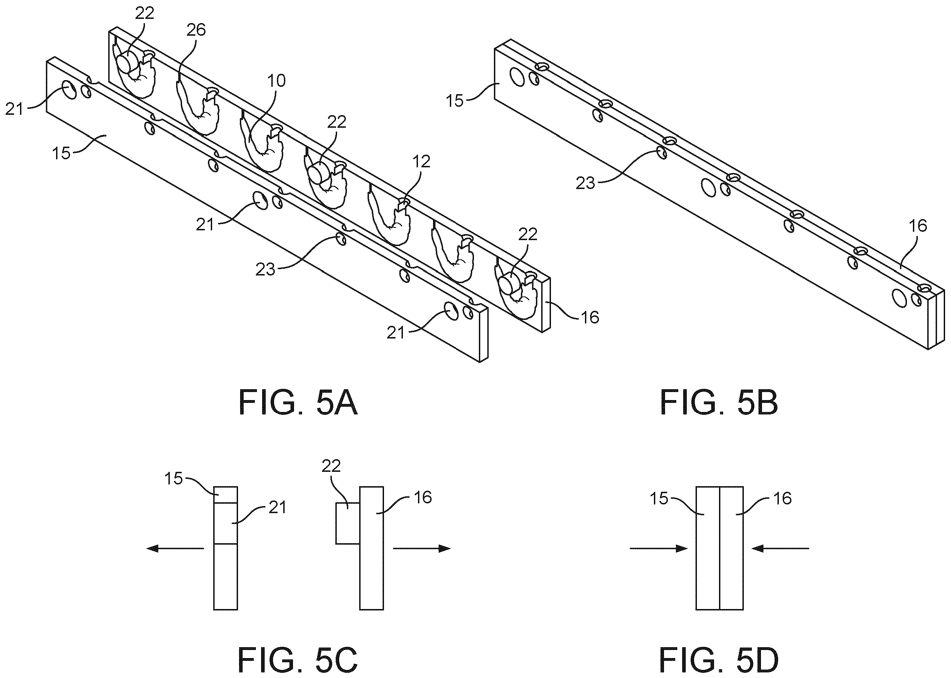

Figures 5A to D show the mould of figure 1. Figure 5A shows an assembled isometric view of the mould 9. As can be seen from this view, the mould is split into the first and second parts 15, 16. The inlets 12 to the cavities 10 can be seen from this figure. As can be seen from this figure, the mould has seven inlets each leading to a cavity. In other examples, a single mould may have more or less than seven inlets 12 and cavities 10. The first and second parts 15, 16 of the mould 9 are joined together by plugs and holes. These are described with respect to figure 5B.

Figure 5B shows the mould 9 with the first and second parts 15, 16 separated from one another. The shrimp shaped cavities 10 are shown. Half of each cavity is formed in each of the first and second parts 15, 16. One or more holes 21 are formed in either of the first and second parts 15, 16 to receive one or more plugs 22 formed in the other of the first and second parts. Also shown in figure 5B is the exhaust vent 26. As can be seen from figure 5B, the exhaust vent 26 extends from the tail end of the cavity to the same surface as the inlet 12. The exhaust vent 26 has a smaller cross sectional area than the inlet 12.

Figure 5C shows a cross sectional view of the first and second parts 15, 16 separated and figure 5D shows a cross sectional view of the first and second parts 15, 16 joined together.

Although figure 5 shows the first and second parts 15, 16 joined by holes 21 and plugs 22, these parts could be releasably attached together in other ways. For example, the parts 15, 16 could magnetically or electromagnetically join together or may be attached by a releasable latch. Alternatively, an adjustable claw may be used to connect the two.

Figures 5A and 5B additionally show openings 23 located in the side of the first part 15 of the mould 9 adjacent each inlet. These openings 23 form part of the closure arrangement, as will be discussed later.

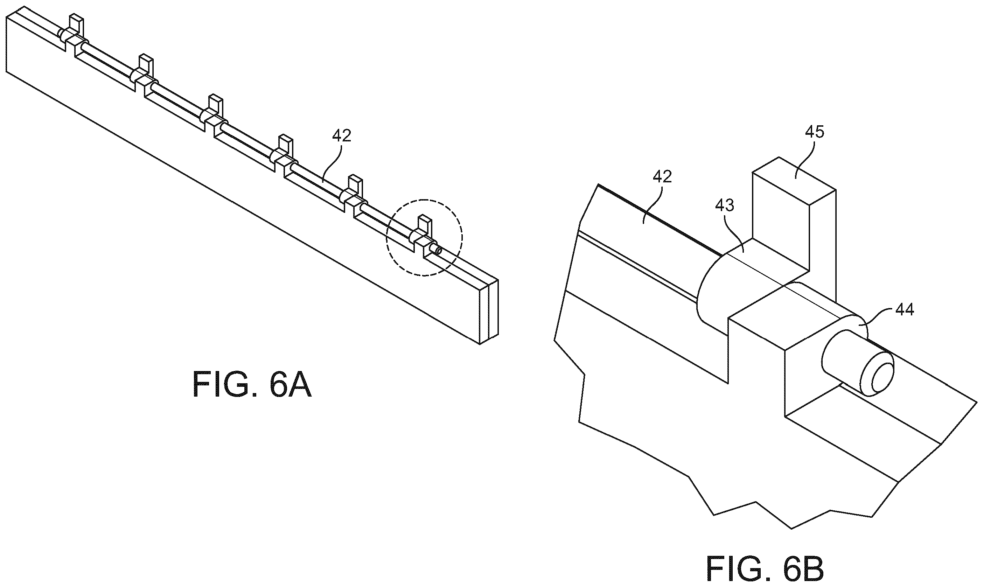

Figures 6A and 6B show an example of how the first and second parts 15, 16 of the mould 9 may be attached at the side of the mould opposite to that on which the inlet 12 and outlet 26 are arranged. Figure 6B shows a zoomed in portion of figure 6A. The two parts 15, 16 are attached by a hinge 42. The hinge extends through brackets 43, 44 on the first and second parts 15, 16. The brackets 43, 44 rotate about the hinge 42 to open the mould 9. One of the brackets may additionally comprise an index 45 to open/close the mould. This may be opened by mechanical force.

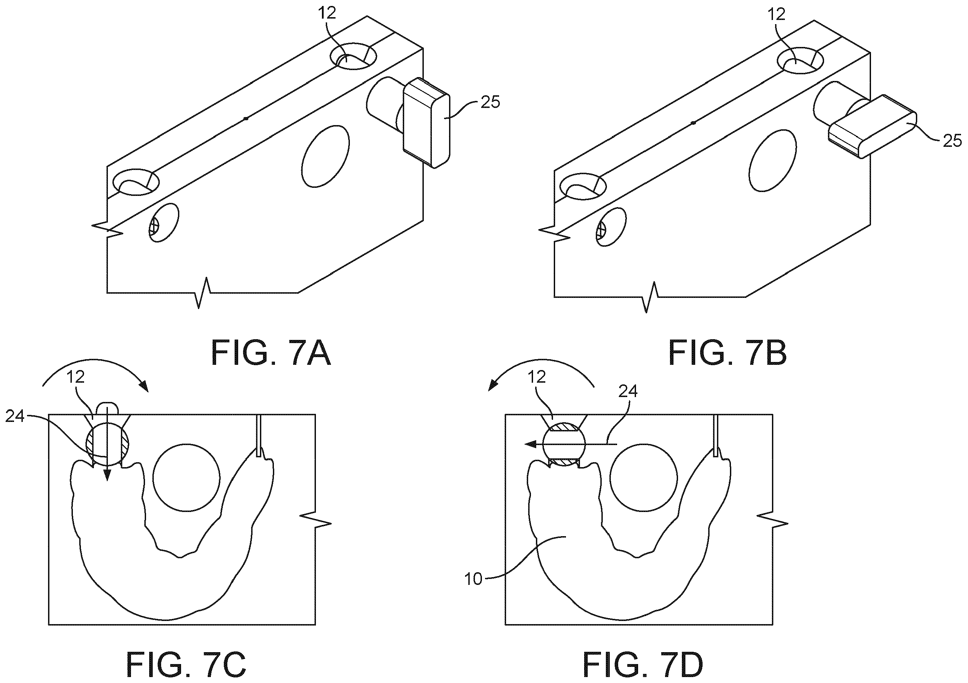

Figures 7A to 7D show an example of a closure arrangement for the food moulding apparatus. In this example, each opening 23 in the side of the mould 9 comprises a rotatable valve 24 with a handle 25. In a first position as shown in figures 7A and 7C, the valve is open and food stuff is able to flow through the inlet 12. In a second position as shown in figures 7B and 7D, the valve is closed and food stuff is prevented from flowing through the inlet 12.

When multiple moulds are used as shown in figure 1, multiple valves may be formed on a rod. The rod may be run through multiple moulds, perpendicular to the extending direction of the moulds.

In other examples, other means may be used for the closure arrangement. For example, rather than a rod with multiple valves being used and running perpendicular to the moulds, a rod with multiple valves may be used and may be inserted into the end of the mould such that it extends along its length. In this configuration, an opening may be formed in the end of the mould and not in the sides.

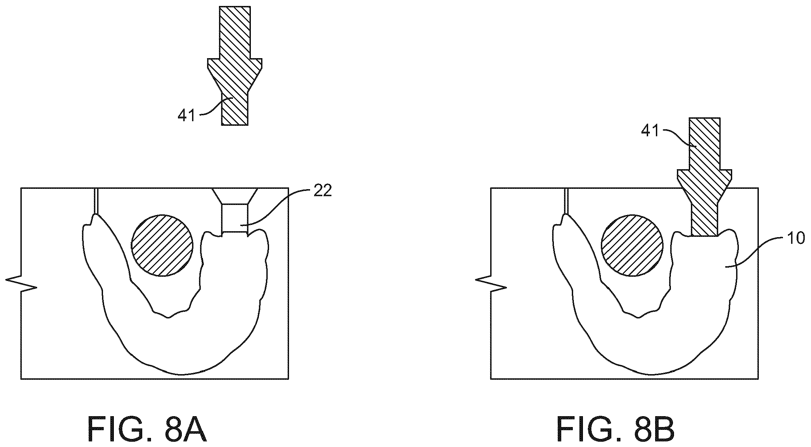

Figure 8 shows an alternative example of a closure arrangement for the food moulding apparatus. In this arrangement, bungs or stoppers 41 are used to block the inlet 22. These may be formed of silicon. In a mould with multiple cavities as shown in figure 5, the stoppers 41 may be attached together in a line. The stoppers 41 may be pushed into the inlets 22 manually or automatically. Figure 8A show the stopper removed from the mould and figure 8B shows the stopper inserted into the mould.

Still further alternatives could be used for the closure arrangement of the present application. Once the cavities have been filled, the mould may be rotated so that the inlet and outlet face into the surface on which the mould is located. Thus, the interaction between the inlet and the surface provides the closure arrangement due to the pressure from the weight of the mould. If this approach is taken, additional weight may be applied to the upwardly facing surface to counter the increased pressure during heating and mass expansion. Alternatively, a hinged or spring loaded lid may be used on the mould or a mechanical cam may be used.

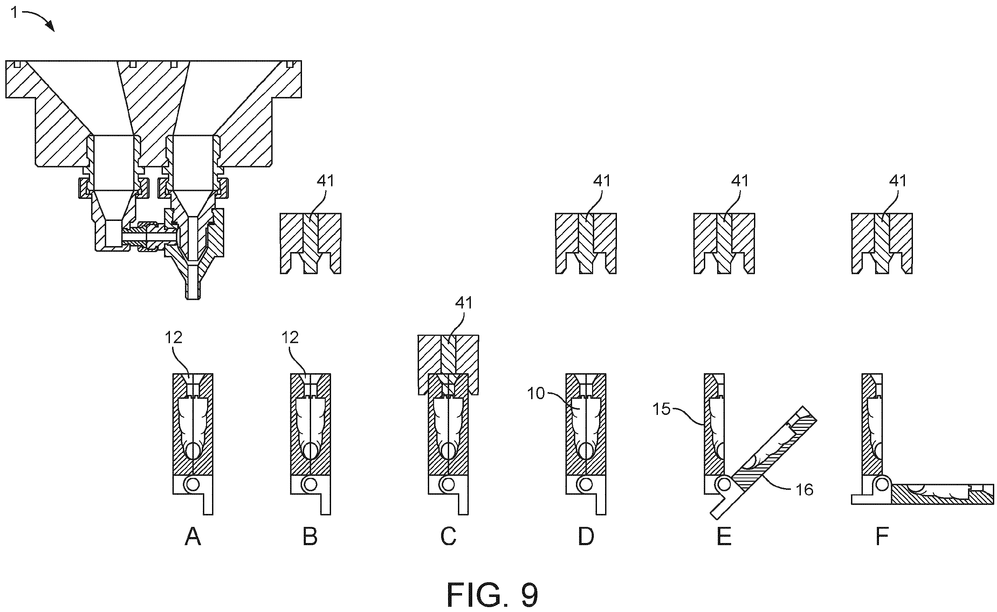

Figure 9 shows a process for using the closure arrangement shown in figure 8. First, the food stuff is injected into the cavity 10 by injector arrangement 1(A). Next, stopper or stoppers 41 is/are lowered toward mould 9 (B). The stopper or stoppers 41 are inserted into the inlet or inlets 12 of the mould 9 (C). The mould 9 is heated (as discussed above) after which the stopper or stoppers 41 is/are removed (D). The first and second parts 15, 16 of the mould are then opened to release the formed shrimp (E, F).

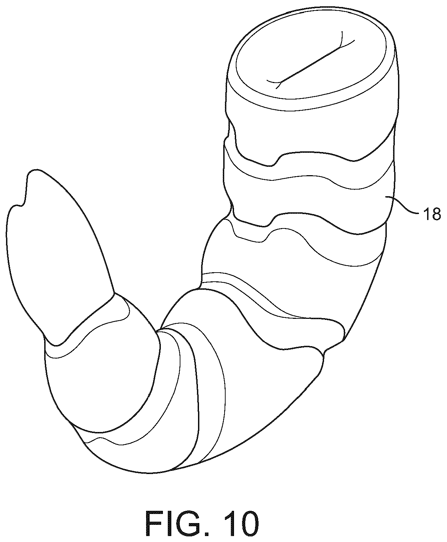

Figure 10 shows a shrimp 18 moulded by the food moulding apparatus.

## Claims

1. A food moulding apparatus, the moulding apparatus comprising:
at least one mould (9) comprising at least one cavity (10) for receiving a food stuff to be moulded;
an injector arrangement (1) comprising at least one injection nozzle (6) (7) or at least one array of injection nozzles (6) (7);
wherein each cavity (10) comprises an inlet (12) configured in use to receive the food stuff from the injector arrangement (1) and an outlet configured in use to allow gas out of the cavity (10);
**characterized in that** the apparatus additionally comprises a closure arrangement (13), wherein the closure arrangement (13) is configured to selectively close the inlet (12), wherein the closure arrangement (13) comprises a plurality of stoppers (41), each configured to be inserted into an inlet (12) of a cavity (10) or wherein the closure arrangement (13) comprises a valve (24) in each inlet (12) selectively allowing food stuff into a cavity (10).

2. The apparatus of claim 1, wherein an inlet cross sectional area is greater than an outlet cross sectional area.

3. The apparatus of any of claims 1 or 2, wherein the injector arrangement (1) comprises two storage containers: a first storage container (4) configured to hold a first component of the food stuff and a second storage container (5) configured to hold a second component of the food stuff.

4. The apparatus of claim 3, wherein the injector arrangement (1) comprises two injection nozzles (6) (7):
a first injection nozzle (6) in fluid communication with the first storage container (4); and
a second injection nozzle (7) in fluid communication with the second storage container (5), wherein the cavity (10) is configured to receive food stuff from the first injection nozzle (6) followed by the second injection nozzle (7).

5. The apparatus of claim 3, wherein the injector arrangement (1) comprises a single injection nozzle in fluid communication with the first storage container (4) and the second storage container (5).

6. The apparatus of any preceding claim, wherein an outer surface of the at least one injection nozzle (6) (7) and an inner surface of the inlet (12) are complementary with one another.

7. The apparatus of claim 6, wherein the at least one injection nozzle (6) (7) has a conical outer shape.

8. The apparatus of any preceding claim, wherein the apparatus comprises a plurality of moulds (9), wherein each mould comprises a plurality of cavities (10).

9. The apparatus of any of claims 1 to 8, wherein the stoppers (41) are made of silicon.

10. The apparatus of any preceding claim, wherein the interior surface of the cavity (10) is coated in Polytetrafluoroethylene, PTFE.

11. The apparatus of any preceding claim, wherein the at least one cavity (10) is crustacean shaped.

12. The apparatus of claim 11, wherein the the foodstuff is a shrimp comprising a head end and a tail end.

13. The apparatus of claim 12, wherein the inlet (12) is adjacent the head end of the shrimp and the outlet is adjacent the tail end of the shrimp.

14. A method of forming a food product in the food moulding apparatus of claims 1 to 13, the method comprising:
injecting a first component of the food stuff into the cavity (10);
injecting a second component of the food stuff into the cavity (10);
closing the inlet (12) with the closure arrangement (13);
heating the at least one mould (9); and
removing the food product from the mould (9);
wherein the closure arrangement comprises the plurality of stoppers (41), each configured to be inserted into an inlet (12) of a cavity (10) or wherein the closure arrangement (13) comprises a valve in each inlet (12) selectively allowing food stuff into a cavity (10).

15. The method of claim 14 wherein the ratio of the first component of food stuff to the second component of food stuff is approximately 1:7.

16. The method of any of claims 14 or 15, wherein the first component of the food stuff has a first viscosity and the second component of the food stuff has a second viscosity, wherein the first viscosity is lower than the second viscosity.

17. The method of any of claims 14 to 16, wherein the mould (9) is heated to a temperature of between about 80 degrees Celsius and about 200 degrees Celsius.

18. The method of any of claims 14 to 17, wherein the mould (9) is heated for about 20 minutes.

19. The method of any of claims 14 to 18, additionally comprising injecting oil into the cavity (10) before injecting the first component of the food stuff.

## Patentansprüche

1. Lebensmittelformeinrichtung, die Formeinrichtung umfassend:
mindestens eine Form (9), umfassend mindestens einen Hohlraum (10) zum Aufnehmen eines zu formenden Nahrungsmittels;
eine Injektoranordnung (1), umfassend mindestens eine Injektionsdüse (6) (7) oder mindestens eine Reihe von Injektionsdüsen (6) (7);
wobei jeder Hohlraum (10) einen Einlass (12), der in Verwendung konfiguriert ist, um das Nahrungsmittel aus der Injektoranordnung (1) aufzunehmen, und einen Auslass umfasst, der in Verwendung konfiguriert ist, um Gas aus dem Hohlraum (10) herauszulassen;
**dadurch gekennzeichnet, dass** die Einrichtung zusätzlich eine Verschlussanordnung (13) umfasst, wobei die Verschlussanordnung (13) konfiguriert ist, um den Einlass (12) selektiv zu verschließen, wobei die Verschlussanordnung (13) eine Vielzahl von Stopfen (41) umfasst, die jeweils konfiguriert sind, um in einen Einlass (12) eines Hohlraums (10) eingesetzt zu werden, oder wobei die Verschlussanordnung (13) ein Ventil (24) in jedem Einlass (12) umfasst, das das Nahrungsmittel selektiv in einen Hohlraum (10) hineinlässt.

2. Einrichtung nach Anspruch 1, wobei ein Einlassquerschnittsbereich größer als ein Auslassquerschnittsbereich ist.

3. Einrichtung nach einem der Ansprüche 1 oder 2, wobei die Injektoranordnung (1) zwei Aufbewahrungsbehälter umfasst: einen ersten Aufbewahrungsbehälter (4), der konfiguriert ist, um eine erste Komponente des Nahrungsmittels zu fassen, und einen zweiten Aufbewahrungsbehälter (5), der konfiguriert ist, um eine zweite Komponente des Nahrungsmittels zu fassen.

4. Einrichtung nach Anspruch 3, wobei die Injektoranordnung (1) zwei Injektionsdüsen (6) (7) umfasst:
eine erste Injektionsdüse (6) in Fluidverbindung mit dem ersten Aufbewahrungsbehälter (4); und
eine zweite Injektionsdüse (7) in Fluidverbindung mit dem zweiten Aufbewahrungsbehälter (5), wobei der Hohlraum (10) konfiguriert ist, um das Nahrungsmittel aus der ersten Injektionsdüse (6), gefolgt von der zweiten Injektionsdüse (7), aufzunehmen.

5. Einrichtung nach Anspruch 3, wobei die Injektoranordnung (1) eine einzelne Injektionsdüse in Fluidverbindung mit dem ersten Aufbewahrungsbehälter (4) und dem zweiten Aufbewahrungsbehälter (5) umfasst.

6. Einrichtung nach einem der vorstehenden Ansprüche, wobei eine Außenoberfläche der mindestens einen Injektionsdüse (6) (7) und eine Innenoberfläche des Einlasses (12) komplementär zueinander sind.

7. Einrichtung nach Anspruch 6, wobei die mindestens eine Injektionsdüse (6) (7) eine konische Außengestalt aufweist.

8. Einrichtung nach einem der vorstehenden Ansprüche, wobei die Einrichtung eine Vielzahl von Formen (9) umfasst, wobei jede Form eine Vielzahl von Hohlräumen (10) umfasst.

9. Einrichtung nach einem der Ansprüche 1 bis 8, wobei die Stopfen (41) aus Silikon hergestellt sind.

10. Einrichtung nach einem der vorstehenden Ansprüche, wobei die Innenoberfläche des Hohlraums (10) mit Polytetrafluorethylen, PTFE, beschichtet ist.

11. Einrichtung nach einem der vorstehenden Ansprüche, wobei der mindestens eine Hohlraum (10) krebstierähnlich gestaltet ist.

12. Einrichtung nach Anspruch 11, wobei das Nahrungsmittel eine Garnele, umfassend ein Kopfende und ein Schwanzende, ist.

13. Einrichtung nach Anspruch 12, wobei sich der Einlass (12) angrenzend an das Kopfende der Garnele befindet und sich der Auslass angrenzend an das Schwanzende der Garnele befindet.

14. Verfahren zum Ausbilden eines Lebensmittelprodukts in der Lebensmittelformeinrichtung der Ansprüche 1 bis 13, das Verfahren umfassend:
Injizieren einer ersten Komponente des Nahrungsmittels in den Hohlraum (10);
Injizieren einer zweiten Komponente des Nahrungsmittels in den Hohlraum (10);
Verschließen des Einlasses (12) mit der Verschlussanordnung (13);
Erwärmen der mindestens einen Form (9); und
Entnehmen des Lebensmittelprodukts aus der Form (9);
wobei die Verschlussanordnung die Vielzahl von Stopfen (41) umfasst, die jeweils konfiguriert sind, um in einen Einlass (12) eines Hohlraums (10) eingesetzt zu werden, oder wobei die Verschlussanordnung (13) in jedem Einlass (12) ein Ventil umfasst, das das Nahrungsmittel selektiv in einen Hohlraum (10) hineinlässt.

15. Verfahren nach Anspruch 14, wobei das Verhältnis der ersten Komponente des Nahrungsmittels zu der zweiten Komponente des Nahrungsmittels etwa 1 : 7 beträgt.

16. Verfahren nach einem der Ansprüche 14 oder 15, wobei die erste Komponente des Nahrungsmittels eine erste Viskosität aufweist und die zweite Komponente des Nahrungsmittels eine zweite Viskosität aufweist, wobei die erste Viskosität niedriger als die zweite Viskosität ist.

17. Verfahren nach einem der Ansprüche 14 bis 16, wobei die Form (9) auf eine Temperatur zwischen etwa 80 Grad Celsius und etwa 200 Grad Celsius erwärmt wird.

18. Verfahren nach einem der Ansprüche 14 bis 17, wobei die Form (9) etwa 20 Minuten lang erwärmt wird.

19. Verfahren nach einem der Ansprüche 14 bis 18, zusätzlich umfassend das Injizieren von Öl in den Hohlraum (10) vor dem Injizieren der ersten Komponente des Nahrungsmittels.

## Revendications

1. Appareil de moulage d'aliments, l'appareil de moulage comprenant :
au moins un moule (9) comprenant au moins une cavité (10) destinée à recevoir une denrée alimentaire à mouler ;
un dispositif d'injection (1) comprenant au moins une buse d'injection (6) (7) ou au moins un ensemble de buses d'injection (6) (7) ;
dans lequel chaque cavité (10) comprend une entrée (12) conçue pour recevoir la denrée alimentaire provenant du dispositif d'injection (1) et une sortie conçue pour laisser sortir le gaz de la cavité (10) ;
**caractérisé en ce que** l'appareil comprend en outre un dispositif de fermeture (13), dans lequel le dispositif de fermeture (13) est conçu pour fermer sélectivement l'entrée (12), dans lequel le dispositif de fermeture (13) comprend une pluralité de bouchons (41), chacun conçu pour être inséré dans une entrée (12) d'une cavité (10) ou dans lequel le dispositif de fermeture (13) comprend une soupape (24) dans chaque entrée (12) permettant sélectivement à la denrée alimentaire d'entrer dans une cavité (10).

2. Appareil selon la revendication 1, dans lequel la zone de section transversale d'entrée est supérieure à la zone de section transversale de sortie.

3. Appareil selon l'une quelconque des revendications 1 ou 2, dans lequel le dispositif d'injection (1) comprend deux conteneurs de stockage : un premier conteneur de stockage (4) conçu pour contenir un premier composant de la denrée alimentaire et un second conteneur de stockage (5) conçu pour contenir un second composant de la denrée alimentaire.

4. Appareil selon la revendication 3, dans lequel le dispositif d'injection (1) comprend deux buses d'injection (6) (7) :
une première buse d'injection (6) en communication fluidique avec le premier conteneur de stockage (4) ; et
une seconde buse d'injection (7) en communication fluide avec le second récipient de stockage (5), dans lequel la cavité (10) est conçue pour recevoir la denrée alimentaire de la première buse d'injection (6) suivie de la seconde buse d'injection (7).

5. Appareil selon la revendication 3, dans lequel le dispositif d'injection (1) comprend une seule buse d'injection en communication fluidique avec le premier conteneur de stockage (4) et le second conteneur de stockage (5).

6. Appareil selon toute revendication précédente, dans lequel une surface extérieure de l'au moins une buse d'injection (6) (7) et une surface intérieure de l'entrée (12) sont complémentaires l'une de l'autre.

7. Appareil selon la revendication 6, dans lequel l'au moins une buse d'injection (6) (7) a une forme extérieure conique.

8. Appareil selon toute revendication précédente, dans lequel l'appareil comprend une pluralité de moules (9), dans lequel chaque moule comprend une pluralité de cavités (10).

9. Appareil selon l'une quelconque des revendications 1 à 8, dans lequel les bouchons (41) sont en silicone.

10. Appareil selon toute revendication précédente, dans lequel la surface intérieure de la cavité (10) est recouverte de polytétrafluoroéthylène, PTFE.

11. Appareil selon toute revendication précédente, dans lequel l'au moins une cavité (10) a la forme d'un crustacé.

12. Appareil selon la revendication 11, dans lequel la denrée alimentaire est une crevette comprenant une tête et une queue.

13. Appareil selon la revendication 12, dans lequel l'entrée (12) est adjacente à l'extrémité de la tête de la crevette et la sortie est adjacente à l'extrémité de la queue de la crevette.

14. Procédé de formation d'une denrée alimentaire dans l'appareil de moulage alimentaire selon les revendications 1 à 13, le procédé comprenant :
l'injection d'un premier composant de la denrée alimentaire dans la cavité (10) ;
l'injection d'un second composant de la denrée alimentaire dans la cavité (10) ;
la fermeture de l'entrée (12) à l'aide du dispositif de fermeture (13) ;
le chauffage de l'au moins un moule (9) ; et
le retrait de la denrée alimentaire du moule (9) ;
dans lequel le dispositif de fermeture comprend la pluralité de bouchons (41), chacun conçu pour être inséré dans une entrée (12) d'une cavité (10) ou dans lequel le dispositif de fermeture (13) comprend une soupape dans chaque entrée (12) permettant sélectivement à la denrée alimentaire d'entrer dans une cavité (10).

15. Procédé selon la revendication 14, dans lequel le rapport entre le premier composant de la denrée alimentaire et le second composant de la denrée alimentaire est d'environ 1:7.

16. Procédé selon l'une quelconque des revendications 14 ou 15, dans lequel le premier composant de la denrée alimentaire a une première viscosité et le second composant de la denrée alimentaire a une seconde viscosité, dans lequel la première viscosité est inférieure à la seconde viscosité.

17. Procédé selon l'une quelconque des revendications 14 à 16, dans lequel le moule (9) est chauffé à une température comprise entre environ 80 degrés Celsius et environ 200 degrés Celsius.

18. Procédé selon l'une quelconque des revendications 14 à 17, dans lequel le moule (9) est chauffé pendant environ 20 minutes.

19. Procédé selon l'une quelconque des revendications 14 à 18, comprenant en outre l'injection d'huile dans la cavité (10) avant l'injection du premier composant de la denrée alimentaire.
